# EUROPEAN PATENT SPECIFICATION

(11) **EP 1 270 456 B1**
(45) Date of publication and mention of the grant of the patent: **10.03.2004**
(21) Application number: 02013378.1
(22) Date of filing: 19.06.2002
(51) Int. Cl.: B65G 29/00, B65G 47/84

(54) **Apparatus for selectively feeding profiled pieces into separate collection seats in a rotatable disc**
Vorrichtung zum Zuführen profilierter Gegenstände in Aufnahmen in einer Drehscheibe
Dispositif d'alimentation sélective de pièces profilés dans des sièges d'un plateau rotatif

(30) Priority: 27.06.2001 IT MI20011349
(43) Date of publication of application: 02.01.2003
(73) Proprietor: TES S.p.A., 66020 San Giovanni Teatino (CH) (IT)
(72) Inventor: Salerni, Roberto, 65128 Pescara (IT); Mancini, Carlo, 65025 Cugnoli (Pescara) (IT)
(74) Representative: Frignoli, Luigi

(56) References cited:
- US-A- 4 131 192
- US-A- 4 777 907

## Description

The present invention relates to an apparatus for selectively feeding profiled pieces by gravity into collection seats in a disc rotatable about a vertical axis.

Many components of machines, devices and articles of various kinds are known to consist of identical profiled pieces (for example springs, rollers, pins etc.) which are withdrawn from a hopper or the like (in which these components are collected randomly) to then be selectively positioned in the desired manner and at the desired point of the machine or device of which they are to form part.

Automatic devices exist for positioning the components on said machines or devices, by withdrawing them with precision at high speed from a disc or conveyor belt having seats into which these components have been previously inserted.

The most serious technical problem is to withdraw the components from a source (hopper) which feeds them continuously in succession, and then to selectively insert and position these components in appropriate seats in a rotating disc or the like. These seats move along a circumference and pass below the lower end of a loader from which the components are allowed to fall selectively into the seats. As the translational movement of the disc seats is continuous, the time allowed for the components to correctly fall from the loader and into the seats is very short, hence if the speed of movement of the seats is increased, the components which have to fall into the seats no longer have the time to undergo free and complete transfer from the loader into the said seats, with obvious consequences.

The main object of the present invention is to provide an apparatus which enables the translational speed of the seats into which the components are to fall to be considerably increased while still ensuring that the time for which the lower discharge end of the loader remains above the upper end of each movable seat as it becomes positioned below and passes below it is sufficiently long.

The invention therefore provides an apparatus for selectively feeding profiled pieces into collection seats provided in the periphery of a disc or the like supported by a main shaft rotatable about a substantially vertical axis, above the disc there being positioned at least one loader comprising a discharge tube, the upper end of which is connected to a hopper for randomly collecting profiled pieces and the lower end of which is positioned above the disc, characterised in that a sleeve is mounted on said main shaft via rolling bearings and is freely rotatable about an axis coinciding with the axis of the main shaft, said sleeve supporting, via rolling bearings, at least one secondary shaft parallel to the main shaft and on which there is keyed a pinion which engages a gearwheel coaxial or rigid with the main shaft, the secondary shaft extending above the disc and carrying said discharge tube which undergoes a rotary path of travel about the axis of the secondary shaft, to move along a circumference which for a short distance is superposed on the circular path along which said disc seats move, there projecting from the sleeve an intercepting wall which extends between the peripheral upper surface of the edge of the disc and the lower end of said discharge tube and has a hole dimensioned to enable said profiled pieces to pass, the hole in the intercepting wall being superposed on the circumference along which the disc seats move, the secondary shaft supporting at its upper end a slide which oscillates in a horizontal plane between a position in which an interception member rigid with the slide penetrates into the cavity of said discharge tube when said tube is positioned about the edge of the disc, in order to retain within the tube those profiled pieces lying above that piece which is to be automatically allowed to fall from the tube and into the underlying disc seat via the hole in the intercepting wall, and a position in which said interception member emerges from the cavity of the discharge tube, the sleeve being connected to the main shaft by means of a device which causes it to undergo an oscillatory to and fro movement during which the sleeve is moved alternately in the same direction and at the same speed as the disc when the discharge tube is aligned with the hole in the intercepting wall and with that disc seat lying below it and, respectively, in the opposite direction to the disc rotation direction when the discharge tube is moved away from the hole in the intercepting wall while at the same time the interception member is withdrawn from the discharge tube to allow the profiled pieces originating from the hopper to descend by gravity into it.

Preferably, the oscillatory movement of said slide is obtained by interaction between the slide and a cam rigid with said sleeve, a spring urging said slide against the cam.

Again preferably, said slide interception member consists of a pin that can pass through a hole provided in said discharge tube; the discharge tube being connected to the exit of the collection hopper for the profiled pieces by a flexible tube coupled to the upper end of said discharge tube by a rolling joint that enables the discharge tube to rotate freely with respect to the flexible tube.

The structure and characteristics of the apparatus will be more apparent from the ensuing description of one embodiment thereof given by way of non-limiting example with reference to the accompanying drawings, in which:
- Figure 1: is a schematic perspective view of the apparatus;
- Figure 2: is a partial representation on an enlarged scale of the upper part of the apparatus;
- Figure 3: shows the upper left portion of Figure 2 on a more enlarged scale;
- Figures 4 and 5: are schematic views on a considerably reduced scale showing that portion of the apparatus of Figure 3, but in two different successive stages of movement of the movable members shown therein; and
- Figure 6: is a partial schematic representation of a linkage for producing the alternate oscillation of the sleeve forming part of the apparatus.

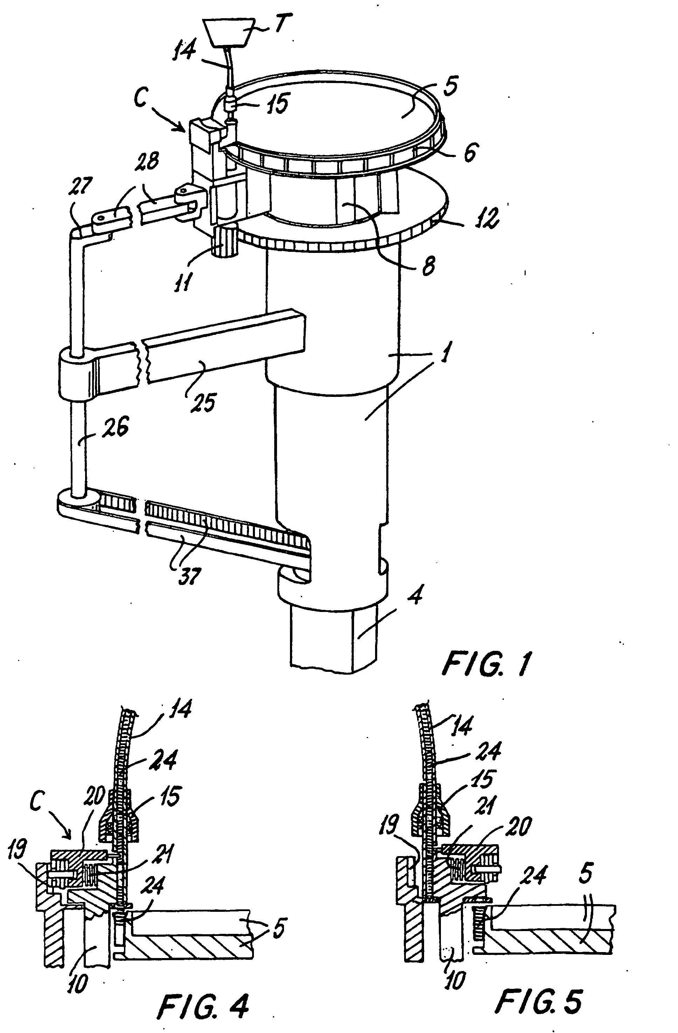

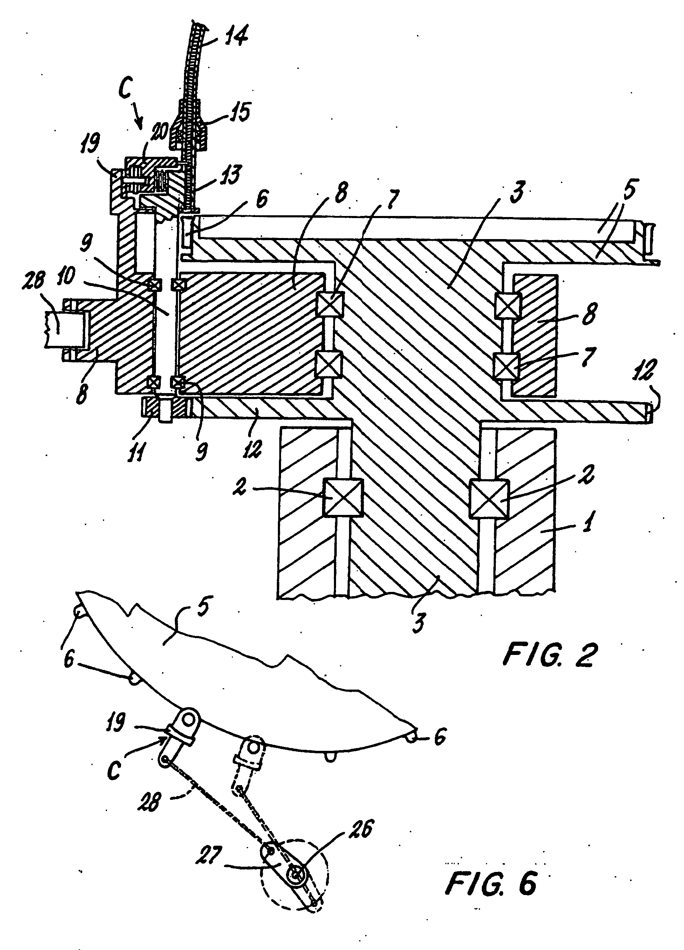

Reference will firstly be made to Figures 1 and 2, from which it can be seen that a fixed structure 1 supports, via bearings 2 (in the accompanying drawings, for simplicity all the bearings which form part of the apparatus and to which reference will be made have been represented by the symbol of a square with an internal cross), a vertical main shaft 3 which is rotated continuously about its axis by a motor 4 shown schematically only in Figure 1. On the upper end of the shaft 3 there is mounted a disc 5 which presents along its periphery a plurality of seats 6 intended to receive and house the profiled pieces described hereinafter. The disc 5 can evidently have a shape different from that shown in the drawings, for example it can consist of a plurality of separate spoke-arranged arms with the seats 6 at their ends.

On the main shaft 3 there is mounted, on rolling bearings 7, a sleeve (or annular member) 8 which is freely rotatable about the said vertical axis of the shaft 3.

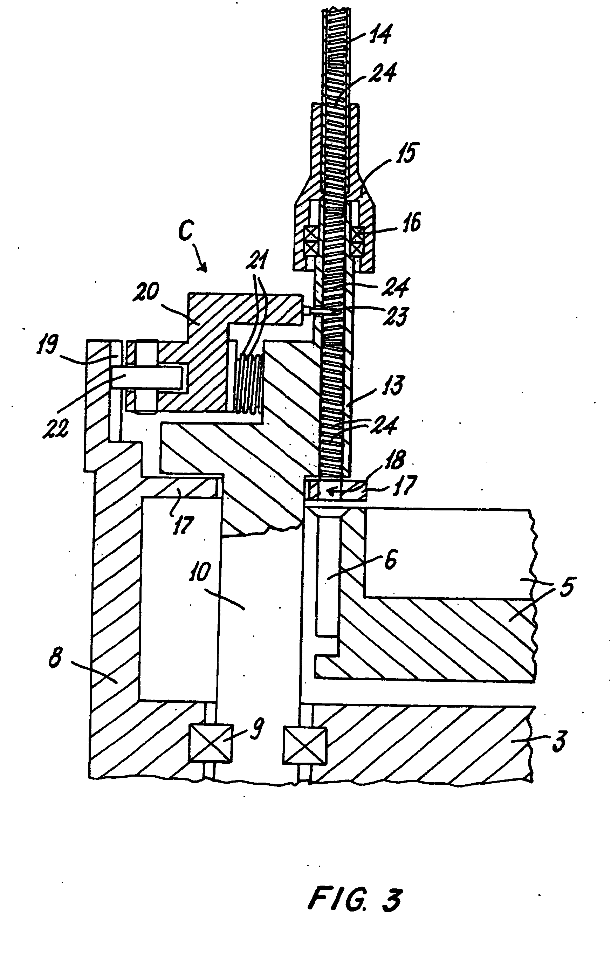

The sleeve 8 supports, via bearings 9, a secondary shaft 10 (Figures 2 and 3) which is parallel to the main shaft. In the drawings only one secondary shaft 10 has been shown, however preferably the sleeve 8 carries a plurality of secondary shafts, all equal to the secondary shaft 10, distributed about the sleeve periphery. On the lower end of the shaft 10 there is keyed a pinion 11 (Figure 2) which engages a gearwheel 12 coaxial to and rigid with the main shaft 3, such that the shaft 3 transmits its rotary movement to the shaft 10.

The upper end of the shaft 10 carries a loader or distributor (indicated overall by the letter C) comprising a discharge tube 13, the upper end of which is connected to a hopper of known type (shown only schematically in Figure 1, where it is indicated by the letter T) for randomly collecting profiled pieces, by a flexible tube 14 (along which the profiled pieces descend by gravity, aligned in a row one behind the other) which is connected to the upper end of the discharge tube 13 of the distributor C by a rolling joint 15 provided with bearings 16 the purpose of which is to enable the tube 13 to rotate with respect to the tube 14.

The lower end of the discharge tube 13 is positioned in proximity to and above an intercepting wall 17 which projects from the sleeve 8 and extends between the peripheral upper surface of the disc 5 and the lower end of the discharge tube 13. The wall 17 has a hole 18, the dimensions of which are such as to allow passage of the profiled pieces which fall from the tube 13, as explained hereinafter. The hole 18 is provided in such a position in the wall 17 as to lie above the circumference along which the seats 6 of the disc translate during rotation of this latter.

From the top of the sleeve 8 there upwardly extends an arc-shaped cam 19, the top of the secondary shaft 10 supporting a slide 20 slidable on guides (not numbered for simplicity) extending perpendicular to the shaft 10 and on which there is wound a spring 21 which urges the slide 20 outwards, the slide being prevented from escaping from its guides by stop members, not shown in the drawings.

The slide 20 carries a roller 22 which can make contact with the cam 19 along an arc of the continuous rotation which the secondary shaft 10 undergoes during the operation of the apparatus. From the slide 20 there projects an interception member in the form of a pin 23 which, as explained hereinafter, moves between a position in which it penetrates through a hole provided in the discharge tube 13 to interfere with the profiled pieces present in the tube, and a retracted position in which the pin emerges from the cavity of the tube 13.

As the shaft 10 rotates about its own axis (by the action of the gearwheel 12 on the pinion 11), the discharge tube 13 and the slide 20 also rotate about the same axis. Specifically, the lower end of the tube 13 moves along a circumference which, for a short distance, is superposed on the circular path along which the seats 6 of the disc 5 move, the roller 22 interfering with the cam 19 (to cause the slide 20 to move against the action of the spring 21) when the tube 13 is aligned with the axes of the hole 18 and of a seat 6 lying below it.

It will be supposed that the profiled pieces to be transferred, one at a time, from the hopper T into the seats 6 of the disc 5 consist of metal springs 24. For clarity the two ends of each spring have been shown consisting of flat spirals perpendicular to the spring axis. The spring present in the discharge tube 13 cannot leave the tube because its lower end rests and slides on the upper surface of the intercepting wall 17 until the tube 13 is in a position coaxial to the hole 18, which occurs (by suitably adjusting the apparatus linkages) when the seat 6 is positioned below said hole 18. When the aforesaid alignment occurs, a spring 24 falls from the tube 13 and into the seat 6, passing through the hole 18.

The spring lying immediately above that which has fallen into the seat 6 cannot descend as it is retained by the pin 23 of the slide 20 which is urged towards the tube 13 by the cam 19.

As the tube 13 and the seat 6 move at different speeds and are mutually aligned for a very short time, the speed of rotation of the disc 5 and of the tubes 13 must evidently be sufficiently low to enable the spring to fall freely through its entire length, from the tube 13 to the seat 6 by passing through the hole in the wall 17.

In Figure 3 the pin 23 is already inserted into the tube 13, however that spring 24 which lies in the bottom of the tube is shown still retained in its interior as it is assumed that the lower end of that spring still rests on the upper surface of the wall 17, i.e. that the tube 13 is not yet perfectly aligned with the hole 18 and with the seat 6. As soon as this alignment occurs, the spring 24 falls from the tube 13, passes through the hole 18 and penetrates into the seat 6 (Figure 4), until the upper end of the spring lies lower than the lower surface of the wall 17.

As the rotary movement of the disc 5 and shaft 10 is continuous, the roller 22 abandons the cam 19, the slide 20 retracts and the springs are able to descend along the tube 13, however their exit from the tube is prevented by the wall 17 (Figure 5).

The important problem that the apparatus of the invention solves is to increase the time for which the tube 13, the hole 18 and the seat 6 are mutually aligned. Other conditions being equal, this enables the rotational speed of the disc 5 to be increased, so substantially increasing the productivity of the apparatus.

For this purpose, the sleeve 8 is connected to a mechanism that causes it to oscillate continuously in one and the opposite direction about the sleeve axis: while the sleeve is rotating in the same direction of rotation as the disc 5, the secondary shaft 10 moves along an arc, about the sleeve axis. If the transmission ratios and speeds are correctly determined, the angular speed of translation of the shaft 10 about the sleeve axis can be equal to the rotational speed of the main shaft 3, in which case the gearwheel 12 would not transmit any rotary movement to the pinion 11, or hence to the shaft 10. If, during this stage, the tube 13 is coaxial with the hole 18 and with its underlying seat 6, the spring has all the time necessary to fall freely into the seat 6. This would occur while the disc 5 continues its rotation.

This oscillatory movement of the sleeve 8 can be easily obtained by mechanical or electronic devices of known type.

To understand how this occurs, the drawings (Figures 1, 2 and 6) show the case in which a rigid arm 25 firmly fixed to the fixed structure 1 (Figure 1) supports a shaft 26 freely rotatable about its axis and driven with continuous rotary movement by a toothed belt 37 extending between two pulleys, one keyed onto the main shaft 3 (not visible in the drawings) and the other keyed onto the lower end of the shaft 26, the upper end of which is connected to the sleeve 8 by a connecting rod and crank system 27, 28.

As will be evident on examining the schematic drawing of Figure 6, the continuous rotation of the shaft 26 causes the sleeve 8 and the loaders C carried by it to oscillate alternately in one and the opposite direction. As already stated, during the movement of the sleeve in one direction by the action of the described crank mechanism, the pinion 11 does not rotate on the gearwheel 12, whereas when the crank mechanism moves in the opposite direction to the aforesaid, the rotational speed of the pinion (and of the loader carried by it) increases gradually.

In any event, the result obtained is that the transfer of the profiled pieces from the loader to the collection seats of the disc 5 takes place with considerable reliability, while the mutual movement between said parts is zero or negligible, with the aforestated advantages.

## Claims

1. An apparatus for selectively feeding profiled pieces (24) into collection seats (6) provided in the periphery of a disc (5) or the like supported by a main shaft (3) rotatable about a substantially vertical axis, above the disc there being positioned at least one loader comprising a discharge tube (13), the upper end of which is connected to a hopper (T) for randomly collecting profiled pieces (24) and the lower end of which is positioned above the disc (5), **characterised in that** a sleeve (8) is mounted on said main shaft (3) via rolling bearings (7) and is freely rotatable about an axis coinciding with the axis of the main shaft, said sleeve (8) supporting, via rolling bearings (9), at least one secondary shaft (10) parallel to the main shaft (3) and on which there is keyed a pinion (11) which engages a gearwheel (12) coaxial or rigid with the main shaft (3), the secondary shaft (10) extending above the disc (5) and carrying said discharge tube (13) which undergoes a rotary path of travel about the axis of the secondary shaft (10), to move along a circumference which for a short distance is superposed on the circular path along which said disc seats (6) move, there projecting from the sleeve (8) an intercepting wall (17) which extends between the peripheral upper surface of the edge of the disc (5) and the lower end of said discharge tube (13) and has a hole (18) dimensioned to enable said profiled pieces (24) to pass, the hole (18) in the intercepting wall (17) being superposed on the circumference along which the disc seats (6) move, the secondary shaft (10) supporting at its upper end a slide (20) which oscillates in a horizontal plane between a position in which an interception member (23) rigid with the slide (20) penetrates into the cavity of said discharge tube (13) when said tube is positioned about the edge of the disc (5), to retain within the tube (13) those profiled pieces (24) lying above that piece which is to be automatically allowed to fall from the tube (13) and into the underlying disc seat (6) via the hole (18) in the intercepting wall (17), and a position in which said interception member (23) emerges from the cavity of the discharge tube (13), the sleeve (8) being connected to the main shaft (3) by means of a device (26-28,37) which causes it to undergo an oscillatory to and fro movement during which the sleeve (8) is moved alternately in the same direction and at the same speed as the disc (5) when the discharge tube (13) is aligned with the hole (18) in the intercepting wall (17) and with that disc seat (6) lying below it and, respectively, in the opposite direction to the disc rotation direction when the discharge tube (13) is moved away from the hole (18) in the intercepting wall (17) while at the same time the interception member (23) is withdrawn from the discharge tube (13) to allow the profiled pieces (24) originating from the hopper (T) to descend by gravity into it.

2. An apparatus as claimed in claim 1, **characterised in that** the oscillatory movement of said slide (20) is obtained by interaction between the slide and a cam (19) rigid with said sleeve (8), a spring (21) urging said slide (20) against the cam (19).

3. An apparatus as claimed in claims 1 or 2, **characterised in that** said slide interception member consists of a pin (23) that can pass through a hole provided in said discharge tube (13).

4. An apparatus as claimed in claims from 1 to 3, **characterised in that** the discharge tube (13) is connected to the exit of the collection hopper (T) for the profiled pieces (24) by a flexible tube (14) coupled to the upper end of said discharge tube (13) by a rolling joint (15,16) that enables the discharge tube (13) to rotate freely with respect to the flexible tube (14).

## Patentansprüche

1. Vorrichtung zum gezielten Zuführen von profilierten Teilen (24) in Sammelplätze (6), welche in dem Umfang einer Scheibe (5) oder ähnlichem vorhanden sind, welche durch eine Hauptwelle (3) um eine im Wesentlichen vertikale Achse drehbar gelagert ist, wobei sich oberhalb der Scheibe mindestens eine eine Entladungsröhre (13) umfassende Ladevorrichtung befindet, wobei deren oberes Ende mit einem Zufuhrbehälter (T) verbunden ist, um profilierte Teile (24) zufällig zu erfassen, und wobei deren unteres Ende oberhalb der Scheibe (5) positioniert ist, **dadurch gekennzeichnet, dass** eine Buchse (8) mittels Wälzlagern (7) auf der Hauptwelle (3) angebracht ist und frei um eine mit der Achse der Hauptwelle übereinstimmenden Achse drehbar ist, wobei die Buchse (8) mittels Wälzlagern (9) mindestens eine zweite Welle (10) parallel zu der Hauptwelle (3) lagert, auf welcher ein Ritzel (11) befestigt ist, welches sich mit einem Zahnrad (12) in Eingriff befindet, das konzentrisch oder starr mit der Hauptwelle (3) angeordnet ist, wobei sich die zweite Welle (10) über die Scheibe (5) erstreckt und die Entladungsröhre (13) trägt, welche einer drehenden Bahn um die Achse der zweiten Welle (10) unterzogen wird, um sich entlang eines Umfanges zu bewegen, welcher sich auf einer kurzen Strecke mit der kreisförmigen Bahn, auf welcher sich die Scheibenplätze (6) bewegen, überdeckt, wobei dort von der Buchse (8) eine Abfangwand (17) hervorsteht, welche sich zwischen der oberen Umfangsoberfläche des Randes der Scheibe (5) und dem unteren Ende der Entladungsröhre (13) erstreckt und ein Loch (18) besitzt, welches derart dimensioniert ist, dass die profilierten Teile (24) passieren können, wobei das Loch (18) in der Abfangwand (17) durch den Umfang überdeckt wird, entlang welchem sich die Scheibenplätze (6) bewegen, wobei die zweite Welle (10) an ihrem oberen Ende eine Gleitfläche (20) hält, welche in einer horizontalen Ebene zwischen einer Position, in welcher ein starr mit der Gleitfläche (20) angeordnetes Abfangteil (23) in einen Hohlraum der Entladungsröhre (13) eindringt, wenn sich die Röhre ungefähr bei dem Rand der Scheibe (5) befindet, um solche profilierten Teile (24) in der Röhre (13) zurückzuhalten, welche oberhalb desjenigen Teiles liegen, welches automatisch aus der Röhre (13) und in den darunter liegenden Scheibenplatz (6) durch das Loch (18) in der Abfangwand (17) fällt, und einer Position schwingt, in welcher das Abfangteil (23) aus dem Hohlraum der Entladungsröhre (13) hervortritt, wobei die Buchse mittels einer Vorrichtung (26-28,37) mit der Hauptwelle (3) verbunden ist, welche bewirkt, dass sie einer hin und her schwingenden Bewegung unterworfen wird, während welcher die Buchse (8) abwechselnd in dieselbe Richtung und mit derselben Geschwindigkeit wie die Scheibe (5), wenn die Entladungsröhre (13) zu dem Loch (18) in der Abfangwand (17) und demjenigen unter ihm liegenden Scheibenplatz (6) ausgerichtet ist, beziehungsweise in die entgegengesetzte Richtung zu der Drehrichtung der Scheibe bewegt wird, wenn die Entladungsröhre (13) weg von dem Loch (18) in der Abfangwand (17) bewegt wird, während zu derselben Zeit das Abfangteil (23) von der Entladungsröhre (13) weggezogen wird, damit die von dem Zufuhrbehälter (T) stammenden profilierten Teile (24) in ihr durch Schwerkraft absinken können.

2. Vorrichtung nach Anspruch 1, **dadurch gekennzeichnet, dass** die schwingende Bewegung der Gleitfläche (20) durch eine Wechselwirkung zwischen der Gleitfläche und einem starr mit der Buchse (8) angeordneten Nocken (19) erzielt wird, wobei eine Feder (21) die Gleitfläche (20) gegen den Nocken (19) drängt.

3. Vorrichtung nach Anspruch 1 oder 2, **dadurch gekennzeichnet, dass** das Abfangteil der Gleitfläche aus einem Stift (23) besteht, welcher durch ein in der Entladungsröhre (13) vorhandenes Loch reichen kann.

4. Vorrichtung nach einem der Ansprüche 1 bis 3, **dadurch gekennzeichnet, dass** die Entladungsröhre (13) mit dem Ausgang des Sammelzufuhrbehälters (T) für die profilierten Teile (24) durch eine flexible Röhre (14) verbunden ist, welche mit dem oberen Ende der Entladungsröhre (13) durch ein Rollverbindungselement (15, 16) gekoppelt ist, welches der Entladungsröhre (13) ermöglicht, sich frei bezüglich der flexiblen Röhre (14) zu drehen.

## Revendications

1. Dispositif pour faire venir de manière sélective des pièces profilées (24) dans des logements (6) présents sur le pourtour d'un disque (5) ou analogue supporté par un arbre principal (3) pouvant tourner autour d'un axe sensiblement vertical, au-dessus du disque étant placé au moins un système de chargement comprenant un tube de déchargement (13) dont l'extrémité supérieure est reliée à une trémie (T) servant à recueillir de manière aléatoire des pièces profilées (24) et dont l'extrémité inférieure est placée au-dessus du disque (5), **caractérisé en ce qu'**un manchon (8) est monté sur ledit arbre principal (3) par l'intermédiaire de paliers à roulements (7) et peut tourner librement autour d'un axe coïncidant avec l'axe de l'arbre principal, ledit manchon (8) supportant, par l'intermédiaire de paliers à roulements (9), au moins un arbre secondaire (10) parallèle à l'arbre principal et sur lequel est claveté un pignon (11) en prise avec une roue dentée (12) coaxiale au ou faisant corps avec l'arbre principal (3), l'arbre secondaire (10) s'étendant au-dessus du disque (5) et portant ledit tube de déchargement (13) qui tourne autour de l'axe de l'axe secondaire (10), pour suivre une circonférence qui, sur une courte distance, est-superposée au trajet circulaire sur lequel se déplacent lesdits logements (6) du disque, depuis le manchon (8) faisant saillie une paroi d'interception (17) qui s'étend entre la surface périphérique supérieure du bord du disque (5) et l'extrémité inférieure dudit tube de déchargement (13) et a un trou (18) dont les dimensions permettent le passage lesdites pièces profilées (24), le trou (18) de la paroi d'interception (17) étant superposé à la circonférence sur laquelle se déplacent les logements (6) du disque, l'arbre secondaire (10) supportant à son extrémité supérieure un coulisseau (20) qui oscille dans un plan horizontal entre une position dans laquelle un élément d'interception (23) faisant corps avec le coulisseau (20) pénètre dans la cavité dudit tube de déchargement (13) lorsque ledit tube est placé autour du bord du disque (5), afin de retenir dans le tube (13) les pièces profilées (24) situées au-dessus de la pièce destinée à être autorisée automatiquement à tomber du tube (13) dans le logement (6) du disque situé au-dessous via le trou (18) de la paroi d'interception (17), et une position dans laquelle ledit élément d'interception (23) sort de la cavité du tube de déchargement (13), le manchon (8) étant relié à l'arbre principal (3) à l'aide d'un dispositif (26-28, 37) qui lui communique un mouvement oscillant d'aller et venue pendant lequel le manchon (8) se déplace alternativement dans la même direction et à la même vitesse que le disque (5) lorsque le tube décharge (13) est aligné avec le trou (18) de la paroi d'interception (17), ce logement (6) de disque étant situé sous celui-ci et, respectivement, dans le sens opposé au sens de rotation du disque lorsque le tube de décharge (13) s'éloigne du trou (18) de la paroi d'interception (17) tandis qu'en même temps l'élément d'interception (23) est retiré du tube de déchargement (13) pour permettre aux pièces profilées (24) venant de la trémie (T) de descendre par gravité dans celui-ci.

2. Dispositif selon la revendication 1, **caractérisé en ce que** le mouvement oscillant dudit coulisseau (20) est obtenu par interaction entre le coulisseau et une came (19) qui fait corps avec ledit manchon (8), un ressort (21) poussant ledit coulisseau (20) contre la came (19).

3. Dispositif selon les revendications 1 ou 2, **caractérisé en ce que** ledit élément d'interception est constitué par un doigt (23) qui peut passer à travers un trou présent dans ledit tube de déchargement (13).

4. Dispositif selon les revendications 1 à 3, **caractérisé en ce que** le tube de déchargement (13) est relié à la sortie de la trémie de regroupement (T) pour les pièces profilées (24) par un tube flexible (14) raccordé à l'extrémité supérieure dudit tube de déchargement (13) par un joint tournant (15, 16) qui permet au tube de déchargement (13) de tourner librement par rapport au tube flexible (14).
